# EUROPEAN PATENT SPECIFICATION

(11) **EP 4 462 562 B1**
(45) Date of publication and mention of the grant of the patent: **11.03.2026**
(21) Application number: 23850434.4
(22) Date of filing: 02.08.2023
(51) Int. Cl.: H01M 50/24, H01M 10/6551

(54) **BATTERY PACK**
BATTERIEPACK
BLOC-BATTERIE

(30) Priority: 05.08.2022 KR 20220098090
(43) Date of publication of application: 13.11.2024
(73) Proprietor: LG Energy Solution, Ltd., Seoul 07335 (KR)
(72) Inventor: SHIN, Ju Hwan, Daejeon 34122 (KR); LEE, Jae Hyun, Daejeon 34122 (KR); LEE, Hyoung Suk, Daejeon 34122 (KR); KIM, Ki Young, Daejeon 34122 (KR)
(74) Representative: Plasseraud IP
(86) International application number: PCT/KR2023/011350
(87) International publication number: WO 2024/029934

(56) References cited:
- EP-A1- 2 019 441
- EP-A1- 4 024 571
- KR-A- 20120 137 792
- KR-A- 20190 004 351
- KR-A- 20200 130 677
- KR-A- 20220 031 530
- KR-A- 20220 091 958
- US-A1- 2018 175 466
- US-A1- 2021 167 439

## Description

This application claims the benefit of priority to Korean Patent Applications No. 10-2022-0098090, filed on August 5, 2022.

### [Technical Field]

The present invention relates to a battery pack accommodating a battery module, a battery pack including a main separation wall with heat dissipation fins that can effectively dissipate heat generated therein.

### [Background Technology of the Invention]

Types of secondary batteries include lithium-ion batteries, lithium polymer batteries, nickel-cadmium batteries, nickel-hydrogen batteries, nickel-zinc batteries, and the like. The operating voltage of these unit secondary batteries, or unit battery cells, is approximately 2.5V to 4.5 V. Therefore, if a higher output voltage is required, a plurality of battery cells may be connected in series to form a battery pack. In addition, depending on the charge/discharge capacity required for the battery pack, a plurality of battery cells may be connected in parallel to form a battery pack. Thus, the number of battery cells included in the battery pack may be varied depending on the required output voltage or charge/discharge capacity.

Meanwhile, when multiple battery cells are connected in series/parallel to form a battery pack, it is common to use at least one battery module to add other components to form a battery pack.

Conventional battery packs include battery modules including a plurality of battery cells, and if an abnormal situation occurs in one of the battery modules, such as the expansion of the battery cells, it can lead to a thermal runaway to the neighboring battery modules and eventually cause the battery pack to explode.

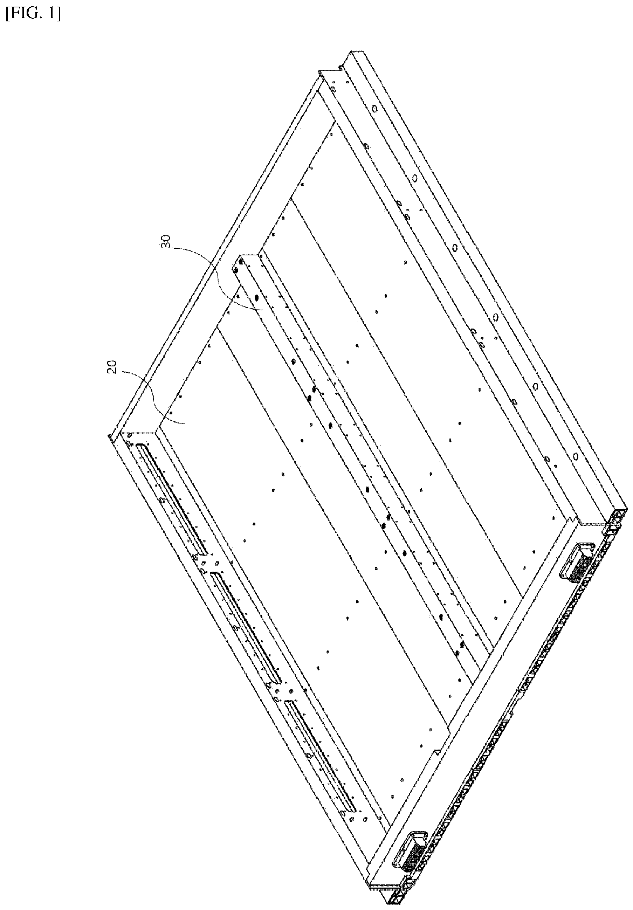

FIG. 1 illustrates a pack case in which battery modules are settled in a conventionally used battery pack, with a plurality of battery modules settled on both sides of a main separation wall extending along the center part.

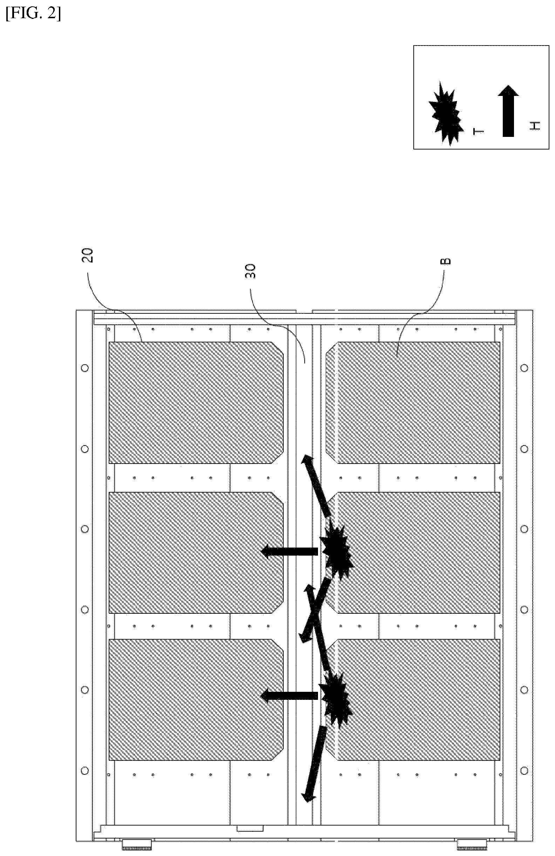

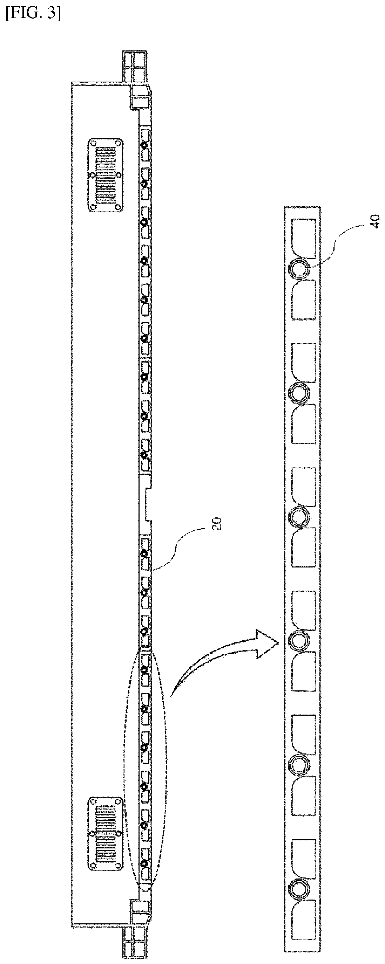

FIG. 2 is a plan view of a battery module settled in the pack case of FIG. 1, and FIG. 3 is a front view and partially enlarged view of the pack case of FIG. 1. In a conventional pack case, if a thermal runaway occurs as shown in FIG. 2 in any one of the battery modules of the plurality of battery modules accommodated therein, there is a risk of high temperature heat being transferred to all of the battery modules, resulting in an explosion of the battery pack. Accordingly, in order to cool the battery modules accommodated in the pack case, a fluid path tube through which coolant flows may be installed inside a base plate included in a lower part of the pack case, as shown in FIG. 3.

However, since the cooling method described above is limited to cooling the heat already generated inside, it is necessary to develop a new structure of the battery pack that can effectively dissipate the heat inside the pack case.

### [Prior Art Document]

Korean Patent Publication No. 10-2258827
US2018175466A1 and EP4024571A1 discloses a battery module. US2021167439A1 discloses a thermal management system for a battery module.

### [Description of the Invention]

### [Technical Problem]

Accordingly, the present invention was conceived to solve the above problems, and aims to provide a battery pack having a structure that allows the battery modules to be cooled from time to time during the charging or discharging process.

Other objects and advantages of the present invention will be understood from the following description, and will become apparent from the embodiments of the present invention. It will also be readily apparent that the objects and advantages of the present invention may be implemented by the means and combinations thereof disclosed in the claims of the patent.

### [Technical Solution]

According to the present invention, the present invention provide a battery pack accommodating a battery module, including: a pack case in which a battery module is settled; wherein the pack case includes: a main separation wall; a base plate coupled to each side of the main separation wall, and including a module area in which the battery module is settled; and a side wall coupled along a perimeter of a base plate coupled to the main separation wall; wherein the main separation wall includes: a heat dissipation part, which includes a heat dissipation fin protruded to allow heat dissipation, at a lower part.

The heat dissipation fin may be formed extending along the longitudinal direction of the main separation wall.

The heat dissipation part may include a plurality of heat dissipation fins formed by being spaced apart at predetermined spacings in the width direction of the main separation wall.

The heat dissipation fin may extend in a straight line, or extend in a wavy pattern.

The heat dissipation fin may extend along the width direction of the main separation wall.

The heat dissipation part may include a plurality of heat dissipation fins formed by being spaced apart at predetermined spacings along the longitudinal direction of the main separation wall.

The heat dissipation fin may extend in a straight line, or extend in a wavy pattern. The heat dissipation fin may be formed extending in a diagonal direction relative to the longitudinal or width direction of the main separation wall.

The heat dissipation part may include a plurality of heat dissipation fins formed by being spaced apart at predetermined spacings along a direction orthogonal to the direction in which the heat dissipation fins are extended.

The heat dissipation fin may extend in a straight line, or extend in a wavy pattern.

The base plate is a hollow type with a hollow inside, and includes a plurality of fluid path tubes formed by extending from the hollow along the longitudinal direction of a pack case.

The base plate may further include: an auxiliary heat dissipation fin in the shape of a rib connecting a bottom part of the hollow and a ceiling part of the hollow inside the hollow and formed by extending along the longitudinal direction of a pack case.

The auxiliary heat dissipation fins may be formed by being spaced apart at predetermined spacings along the width direction of a pack case.

### [Advantageous Effects]

According to the present invention, the temperature of the battery pack can be effectively cooled during the charging and discharging process.

Furthermore, according to the present invention, even if at least one of the battery modules of the plurality of battery modules accommodated is subjected to high temperature heat due to thermal runaway, the transfer of the heat to other battery modules can be delayed or prevented.

### [Brief Description of the Drawings]

FIG. 1 is a perspective view of a pack case included in a conventional battery pack.
FIG. 2 is a plan view of a battery module settled in the pack case of FIG. 1.
FIG. 3 is a front view and partial enlarged view of the pack case of FIG. 1.
FIG. 4 is a perspective view of a pack case included in a battery pack according to a first embodiment of the present invention.
FIG. 5 is a perspective and front view of the main separation wall included in the pack case of FIG. 4.
FIG. 6 is a rear perspective view of the main separation wall of FIG. 5.
FIG. 7 illustrates a modified example of a heat dissipation fin included in the main separation wall of FIG. 6.
FIG. 8 is a plan view of a battery module settled in the pack case of FIG. 4.
FIG. 9 is a rear perspective view of a main separation wall included in a battery pack according to a second embodiment of the present invention.
FIG. 10 illustrates a modified example of a heat dissipation fin included in the main separation wall of FIG. 9.
FIG. 11 is a rear perspective view of a main separation wall included in a battery pack according to a third embodiment of the present invention.
FIG. 12 is a rear perspective view of a main separation wall included in a battery pack according to a fourth embodiment of the present invention.
FIG. 13 is a front view and partial enlarged view of a battery pack according to a fifth embodiment of the present invention.

### [Best Mode for Carrying out the Invention]

Hereinafter, preferred embodiments of the present invention will be described in detail with reference to the accompanying drawings. Before doing so, it should be noted that the terms and words used in this specification and claims are not to be construed in their ordinary or dictionary sense, but rather in a sense and concept consistent with the technical idea of the present invention, based on the principle that the inventor may properly define the concept of a term to best describe his invention.

Accordingly, it is to be understood that the embodiments described herein and the configurations illustrated in the drawings are only the most preferred embodiments of the present invention and do not represent all of the technical ideas of the present invention, and that there may be various equivalents and variations that may be substituted for them at the time of filing the present disclosure.

In addition, in describing the present invention, detailed descriptions of related known configurations or features are omitted where it is determined that such detailed descriptions would obscure the essence of the present invention.

Since the embodiments of the present invention are provided to more fully illustrate the present invention to those of ordinary skill in the art, the shapes and sizes of the components in the drawings may be exaggerated, omitted, or shown schematically for clarity. Accordingly, the size or proportions of each component are not necessarily indicative of its actual size or proportions.

The present invention relates to a battery pack having a structure capable of rapidly discharging high temperature heat to the outside when thermal runaway occurs in a battery module accommodated therein.

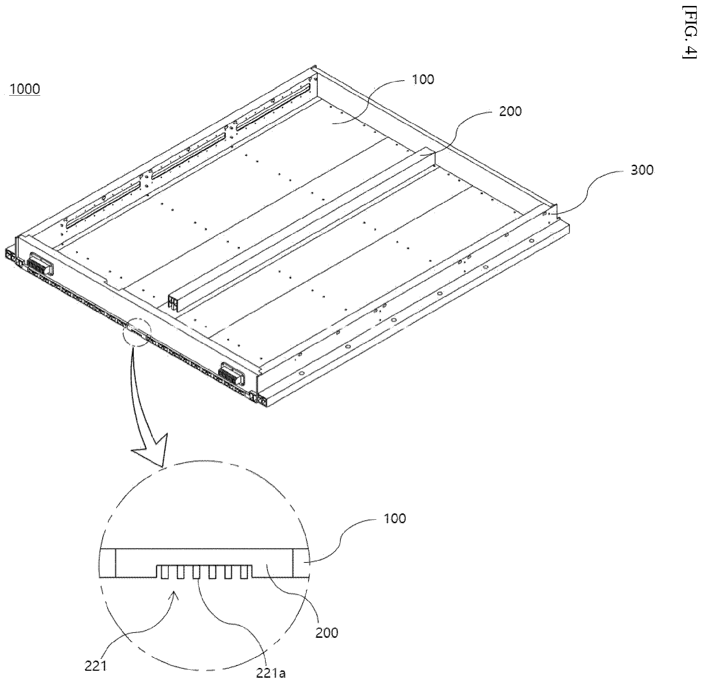

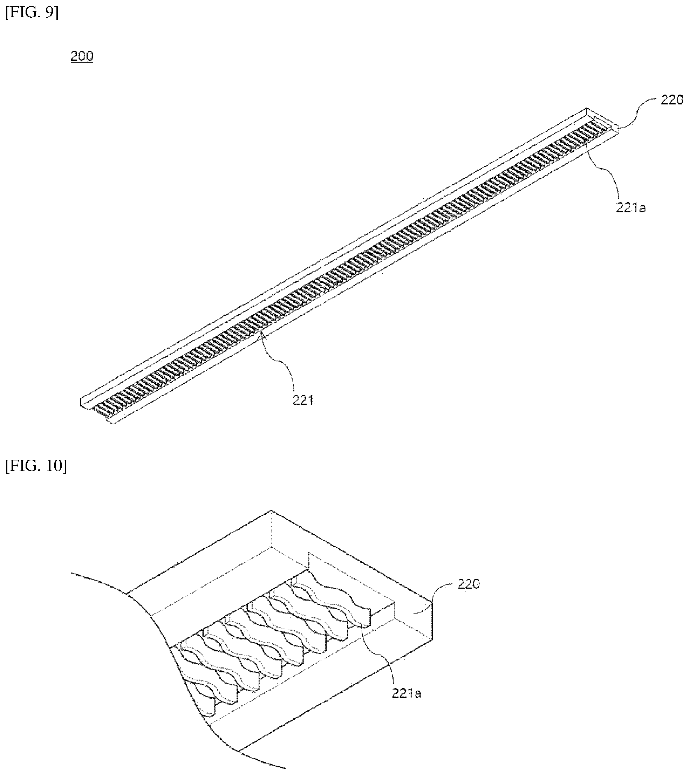

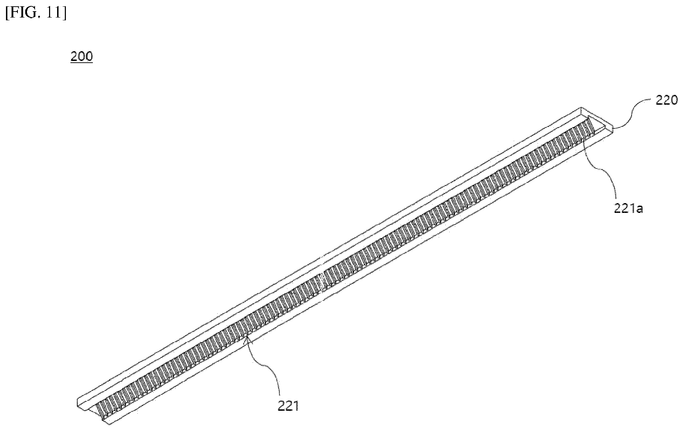

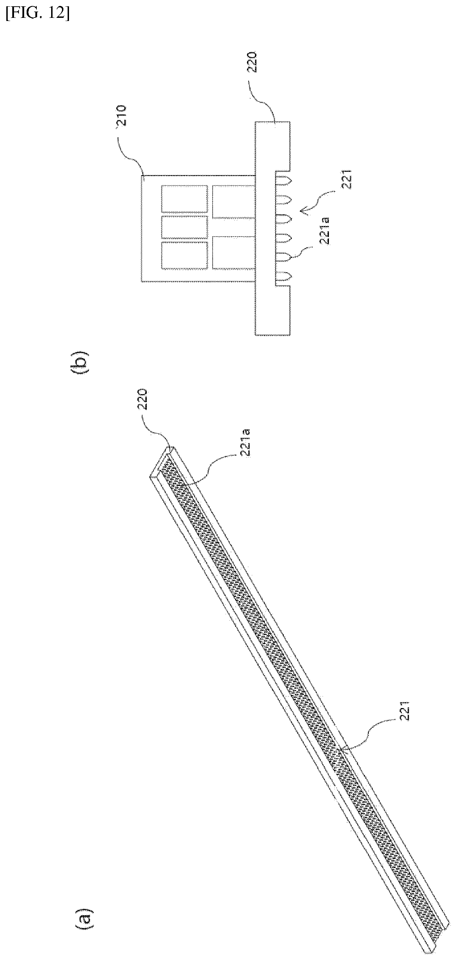

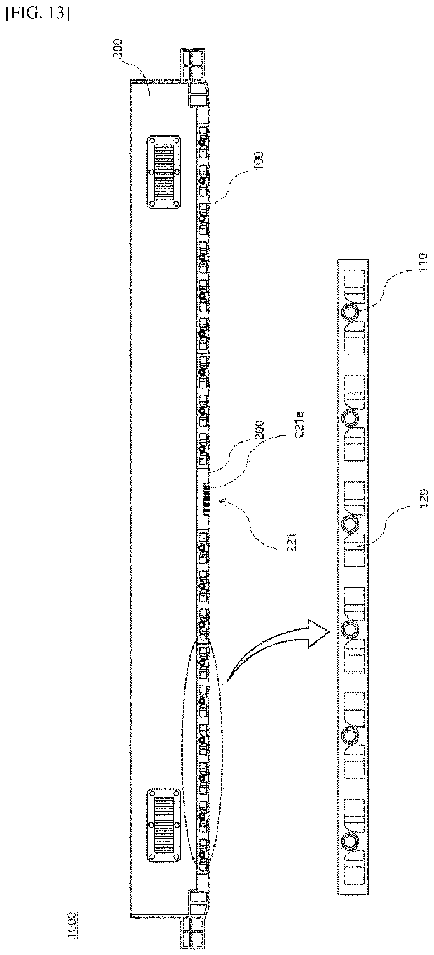

FIGS. 4 through 8 relate to a battery pack according to a first embodiment of the invention, FIGS. 9 through 10 relate to a battery pack according to a second embodiment of the invention, FIG. 11 relates to a battery pack according to a third embodiment of the invention, FIG. 12 relates to a battery pack according to a fourth embodiment of the invention, and FIG. 13 relates to a battery pack according to a fifth embodiment of the invention.

Hereinafter, the battery pack of the present invention will be described in each embodiment with reference to the accompanying drawings.

### (First embodiment)

The battery pack of the present invention includes a pack case 1000 in which battery module B is settled, and an upper cover coupled to the pack case 1000 to cover the upper part of each battery module B accommodated in the pack case 1000.

The pack case 1000 provides a module area, which is a space in which a plurality of battery modules B is settled, and serves to protect the battery modules B settled in the module area from the outside.

Since the upper cover falls within the known art, a detailed description thereof is omitted herein.

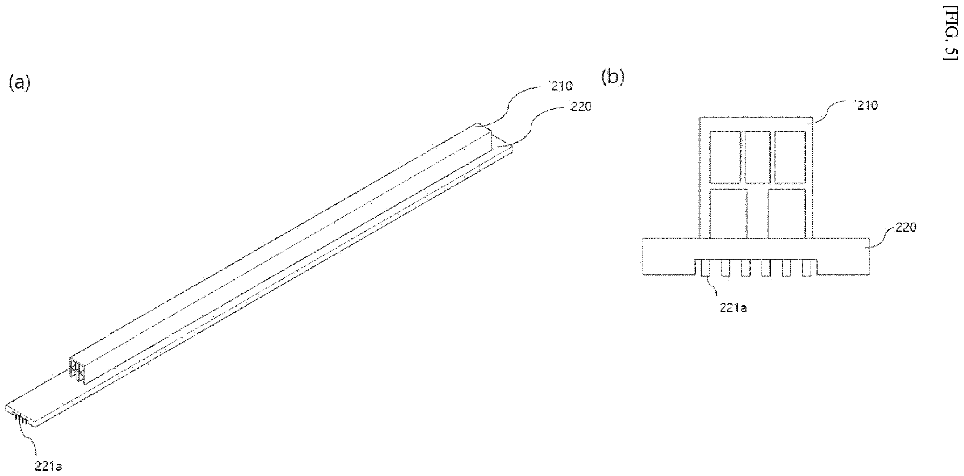

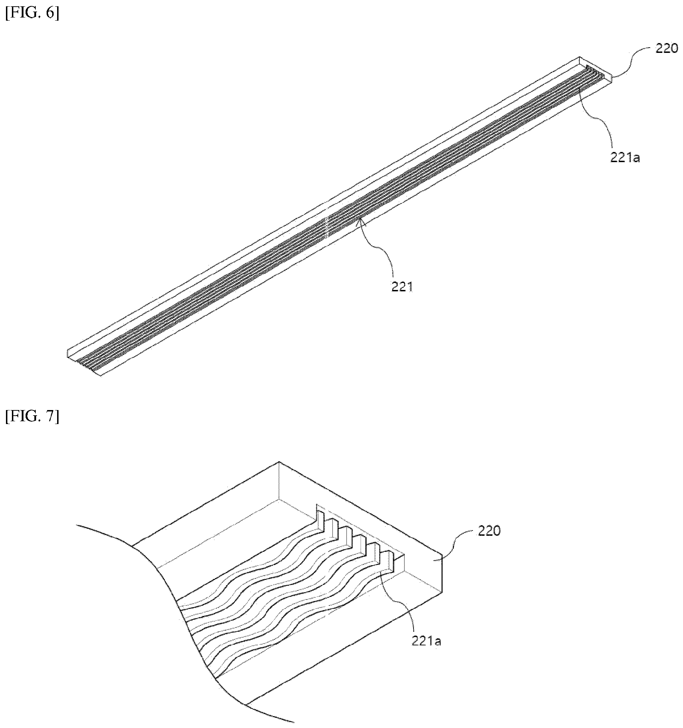

FIG. 4 is a perspective view of a pack case 1000 included in a battery pack according to a first embodiment of the present invention, FIG. 5 is a perspective and front view of a main separation wall 200 included in the pack case 1000 of FIG. 4, and FIG. 6 is a rear perspective view of the main separation wall 200 of FIG. 5.

The pack case 1000 of the present invention includes a main separation wall 200, a base plate 100, and a side wall, as shown in FIG. 4.

The main separation wall 200 serves to compartmentalize the internal space of the pack case 1000, and also serves to protect the battery module B settled inside the pack case 1000.

As needed, the interior of the main separation wall 200 may be inserted with wires or busbars or the like that are installed to traverse the pack case 1000 so as to protect them.

The main separation wall 200 is formed to traverse the center part of the pack case 1000 so as to broadly divide the module area into two spaces.

The plurality of battery modules B that are settled in the pack case 1000 may be positioned on either side with the main separation wall 200 in between.

The main separation wall 200 includes a base part 220 coupled to the base plate, and a protrusion part 210 that protrudes toward the upper part of the base part 220 to support the sides of the battery module B.

The base plate 100 corresponds to the bottom of the pack case 1000 and serves to support the lower part of the battery module B.

More specifically, the base plate 100 includes a module area in which the battery module B is settled.

The base plates 100 exist in pairs and are respectively coupled to both sides of the main separation wall 200.

The side wall serves to support and protect the sides of the battery module B accommodated in the pack case 1000, and is coupled along the perimeter of the base plate 100 coupled to the main separation wall 200.

The main separation wall 200 of the present invention is characterized in that it includes a heat dissipation part 221 that can effectively dissipate Hr heat generated inside the pack case 1000. More specifically, the heat dissipation part 221 is included in the lower part of the base part 220 of the main separation wall 200.

The heat dissipation part 221 includes a plurality of heat dissipation fins 221a extending downwardly from a lower part of the main separation wall 200, as shown in FIG. 5.

The heat dissipation fin 221a of the main separation wall 200 included in the battery pack according to the first embodiment is formed extending along the longitudinal direction of the main separation wall 200, as shown in FIG. 6.

FIG. 7 illustrates a modified example of the heat dissipation fin 221a included in the main separation wall 200 of FIG. 6.

The heat dissipation fin 221a may be formed extending along the longitudinal direction of the main separation wall 200 in a straight shape as shown in FIG. 6, but is not limited thereto, and may also be formed extending in a wavy pattern as shown in FIG. 7. The heat dissipation fin 221a having such a curved shape allows for heat dissipation Hr through a larger surface area in the same space.

The heat dissipation fin 221a in the form described above allows heat absorbed by the entire surface area of the main separation wall 200 to be dissipated through the entire lower part of the main separation wall 200.

The heat dissipation part 221 includes at least one heat dissipation fin 221a as shown in FIGS. 6 and 7, and the plurality of heat dissipation fins 221a formed on the lower part of the main separation wall 200 are spaced apart at predetermined spacings along the width direction of the main separation wall 200.

The main separation wall 200 may absorb heat generated during the process of charging and discharging the cells contained in each battery module B and effectively dissipate Hr the absorbed heat via the heat dissipation fin 221a. Here, the absorbed heat is dissipated Hr to the lower part of the battery pack. In addition, the main separation wall 200 is capable of absorbing high temperature heat generated during a short period of time and rapidly dissipating Hr the absorbed heat via the heat dissipation fin 221a in the event of thermal runaway T in any one of the battery modules B accommodated on one or both sides.

The battery pack of the present invention is capable of preventing a phenomenon such as an explosion of all the battery modules B accommodated in the battery pack by rapidly dissipating Hr through the heat dissipation fins 221a before the heat generated is transferred to the other battery modules B located on the other side of the main separation wall 200, when a thermal runaway T occurs in at least one of the plurality of battery modules B accommodated on one side of the main separation wall 200.

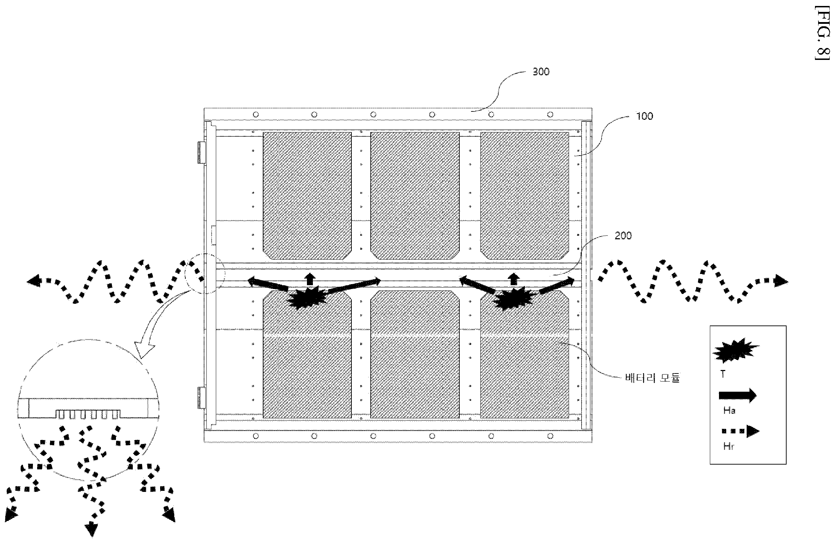

FIG. 8 is a plan view of the battery module B settled in the pack case 1000 of FIG. 4. As shown above, high temperature heat generated by thermal runaway T phenomenon in a plurality of battery modules B located on one side of the main separation wall 200 is absorbed and dissipated Hr by the main separation wall 200. In addition, since heat is continuously dissipated Hr by the main separation wall 200, heat is not properly transferred to other battery modules B located on the other side of the main separation wall 200.

### (Second embodiment)

The main separation wall 200 of the present invention is characterized in that it includes a heat dissipation part 221 that can effectively dissipate Hr heat generated inside the pack case 1000.

FIG. 9 is a rear perspective view of the main separation wall 200 included in a battery pack according to a second embodiment of the present invention.

The heat dissipation part 221 includes a plurality of heat dissipation fins 221a extending downwardly from a lower part of the main separation wall 200, as shown in FIG. 9.

The heat dissipation fin 221a of the main separation wall 200 included in the battery pack according to the second embodiment is formed by extending along the width direction of the main separation wall 200, as shown in FIG. 9.

FIG. 10 illustrates a modified example of the heat dissipation fin 221a included in the main separation wall 200 of FIG. 9.

The heat dissipation fin 221a may be formed extending along the width direction of the main separation wall 200 in a straight shape as shown in FIG. 9, but is not limited thereto, and may also be formed extending in a wavy shape as shown in FIG. 10. The heat dissipation fin 221a having such a curved shape allows for heat dissipation Hr over a larger surface area within the same space.

The heat dissipation part 221a in the form described above allows heat absorbed by the entire surface area of the main separation wall 200 to be dissipated through the entire lower part of the main separation wall 200.

The heat dissipation part 221 includes at least one heat dissipation fin 221a as shown in FIGS. 9 and 10, and the plurality of heat dissipation fins 221a formed on the lower part of the main separation wall 200 are spaced apart at predetermined spacings along the longitudinal direction of the main separation wall 200.

### (Third embodiment)

The main separation wall 200 of the present invention is characterized in that it includes a heat dissipation part 221 that can effectively dissipate Hr heat generated inside the pack case 1000.

FIG. 11 is a rear perspective view of the main separation wall 200 included in a battery pack according to a third embodiment of the present invention.

The heat dissipation part 221 includes a plurality of heat dissipation fins 221a extending downwardly from a lower part of the main separation wall 200, as shown in FIG. 11.

The heat dissipation fins 221a of the main separation wall 200 included in the battery pack according to the third embodiment are formed to extend diagonally relative to the longitudinal direction or width direction of the main separation wall 200, as shown in FIG. 11.

The heat dissipation fin 221a may be formed extending along the width direction of the main separation wall 200 in a straight shape as shown in FIG. 9, but is not limited thereto, and may also be formed extending in a wavy pattern, the same as the main separation wall 200 included in the battery pack according to the first and second embodiments. The heat dissipation fin 221a having such a curved shape enables heat dissipation Hr through a larger surface area within the same space.

The heat dissipation fin 221a in the form described above allows heat absorbed by the entire surface area of the main separation wall 200 to be dissipated through the entire lower part of the main separation wall 200.

The heat dissipation part 221 includes at least one heat dissipation fin 221a as shown in FIG. 11, and the plurality of heat dissipation fins 221a formed on the lower part of the main separation wall 200 are spaced apart at predetermined spacings along a direction orthogonal to the direction in which the heat dissipation fins 221a are extended.

### (Fourth embodiment)

The main separation wall 200 of the present invention is characterized in that it includes a heat dissipation part 221 that can effectively dissipate Hr heat generated inside the pack case 1000.

FIG. 12 is a rear perspective view of the main separation wall 200 included in a battery pack according to a fourth embodiment of the present invention.

The heat dissipation part 221 includes a plurality of heat dissipation fins 221a extending downwardly from a lower part of the main separation wall 200, as shown in FIG. 12.

The heat dissipation fins 221a of the main separation wall 200 included in the battery pack according to the fourth embodiment are formed in the shape of fins as shown in FIG. 12.

The heat dissipation fin 221a in the shape described above allows heat absorbed by the entire surface area of the main separation wall 200 to be dissipated through the entire lower part of the main separation wall 200.

The heat dissipation part 221 includes at least one heat dissipation fin 221a as shown in FIG. 12, and the plurality of heat dissipation fins 221a formed on the lower part of the main separation wall 200 are spaced apart at predetermined spacings.

### (Fifth embodiment)

The battery pack of the present invention includes a pack case 1000 in which battery modules B are settled, and an upper cover coupled to the pack case 1000 to cover the upper part of each battery module B accommodated in the pack case 1000.

The pack case 1000 provides a module area, which is a space in which a plurality of battery modules B is settled, and serves to protect the battery modules B settled in the module area from the outside.

The upper cover falls within the known art, so a detailed description thereof is omitted herein.

The pack case 1000 of the present invention includes a main separation wall 200, a base plate 100, and a side wall.

The main separation wall 200 serves to compartmentalize the internal space of the pack case 1000, and also serves to protect the battery module B settled inside the pack case 1000.

As needed, the interior of the main separation wall 200 may be inserted with wires or busbars or the like that are installed to traverse the pack case 1000 so as to protect them.

The main separation wall 200 is formed to traverse the center part of the pack case 1000 so as to broadly divide the module area into two spaces.

The plurality of battery modules B that are settled in the pack case 1000 may be positioned on either side with the main separation wall 200 in between.

The base plate 100 corresponds to the bottom of the pack case 1000 and serves to support the lower part of the battery module B.

More specifically, the base plate 100 includes a module area in which the battery module B is settled.

The base plates 100 exist in pairs and are respectively coupled to both sides of the main separation wall 200.

The side wall serves to support and protect the sides of the battery module B settled in the pack case 1000, and are coupled along the perimeter of the base plate 100 coupled to the main separation wall 200.

The main separation wall 200 of the present invention is characterized in that it includes a heat dissipation part 221 that can effectively dissipate Hr heat generated inside the pack case 1000.

The heat dissipation part 221 includes a plurality of heat dissipation fins 221a extending downwardly from a lower part of the main separation wall 200.

The heat dissipation fin 221a allows heat absorbed by the entire surface area of the main separation wall 200 to be dissipated through the entire lower part of the main separation wall 200.

The heat dissipation part 221 includes at least one heat dissipation fin 221a, and the plurality of heat dissipation fins 221a formed on the lower part of the main separation wall 200 are spaced apart at a predetermined spacing.

The main separation wall 200 can absorb heat generated during the process of charging and discharging the cells contained in each battery module B and effectively dissipate Hr the absorbed heat via the heat dissipation fin 221a. Here, the absorbed heat is dissipated Hr to the lower part of the battery pack. In addition, the main separation wall 200 is capable of absorbing high temperature heat generated during a short period of time and rapidly dissipating Hr the absorbed heat via the heat dissipation fin 221a in the event of thermal runaway T in any one of the battery modules B accommodated on one or both sides.

The battery pack of the present invention is capable of preventing a phenomenon such as an explosion of all the battery modules B accommodated in the battery pack by rapidly dissipating Hr through the heat dissipation fins 221a before the heat generated is transferred to the other battery modules B located on the other side of the main separation wall 200, when a thermal runaway T occurs in at least one of the plurality of battery modules B accommodated on one side of the main separation wall 200.

The base plate 100 is a hollow shape having a hollow inside, and includes a plurality of fluid path tubes 110 formed inside the hollow and extending along a longitudinal direction of the pack case 1000. In this case, cooling water or the like may move through the fluid path tubes 110, and the cooling water may cool the heat generated by the battery module B as it moves through the fluid path tubes 110.

The base plate 100 included in the battery pack according to the fifth embodiment of the invention is characterized in that it further includes, inside the hollow, in addition to the heat dissipation fins 221a of the main separation wall 200, auxiliary heat dissipation fin 120 having the function of discharging the heat generated inside.

FIG. 13 is a front view and partial enlarged view of a battery pack according to a fifth embodiment of the present invention.

As shown in FIG. 13, the base plate 100 further includes a ribbed auxiliary heat dissipation fin 120 that connects a bottom part of the hollow and a ceiling part of the hollow within the hollow and extends along the longitudinal direction of the pack case 1000.

The auxiliary heat dissipation fin 120 may be formed at predetermined spacings spaced apart along the width direction of the pack case 1000, and heat generated by each battery module B settled on the upper part of the base plate 100 along with coolant traveling through the fluid path tube 110 may be more effectively dissipated Hr through the auxiliary heat dissipation fin 120.

The present invention has been described in more detail above with reference to the drawings and embodiments. However, it is to be understood that the configurations shown in the drawings or embodiments described herein are only one embodiment of the invention and do not represent all of the technical ideas of the present invention, and that there may be various equivalents and modifications that may replace them at the time of filing the present disclosure.

### [Reference numerals]

10: (CONVENTIONAL ART) PACK CASE
20: (CONVENTIONAL ART) BASE PLATE
30: (CONVENTIONAL ART) MAIN SEPARATION WALL
40: (CONVENTIONAL ART) FLUID PATH TUBE
1000: PACK CASE
100: BASE PLATE
110: FLUID PATH TUBE
120: AUXILIARY HEAT DISSIPATION FIN
200: MAIN SEPARATION WALL
210: PROTRUSION PART
220: BASE PART
221: HEAT DISSIPATION PART
221A: HEAT DISSIPATION FIN
300: SIDE WALL
B: BATTERY MODULE
T: THERMAL RUNAWAY
Ha: HEAT (MOVEMENT)
Hr: HEAT DISSIPATION

## Claims

1. A battery pack accommodating a battery module (B), comprising:
a pack case (1000) in which a battery module is settled; wherein
the pack case comprises:
a main separation wall (200);
a base plate (100) coupled to each side of the main separation wall, and including a module area in which the battery module is settled; and
a side wall (300) coupled along a perimeter of a base plate coupled to the main separation wall; and
the main separation wall comprises:
a heat dissipation part (221), which includes a heat dissipation fin (221a) protruded to allow heat dissipation, at a lower part,
**characterized in that** the base plate is a hollow type with a hollow inside, and comprises a plurality of fluid path tubes (110) formed by extending from the hollow along a longitudinal direction of a pack case.

2. The battery pack of claim 1, wherein
the heat dissipation fin is formed extending along a longitudinal direction of the main separation wall.

3. The battery pack of claim 2, wherein
the heat dissipation part comprises a plurality of heat dissipation fins formed by being spaced apart at predetermined spacings in a width direction of the main separation wall.

4. The battery pack of claim 2, wherein
the heat dissipation fin extends in a straight line, or extend in a wavy pattern.

5. The battery pack of claim 1, wherein
the heat dissipation fin extends along a width direction of the main separation wall.

6. The battery pack of claim 5, wherein
the heat dissipation part comprises a plurality of heat dissipation fins formed by being spaced apart at predetermined spacings along a longitudinal direction of the main separation wall.

7. The battery pack of claim 5, wherein
the heat dissipation fin extend in a straight line, or extend in a wavy pattern.

8. The battery pack of claim 1, wherein
the heat dissipation fin is formed extending in a diagonal direction relative to a longitudinal or width direction of the main separation wall.

9. The battery pack of claim 8, wherein
the heat dissipation part comprises a plurality of heat dissipation fins formed by being spaced apart at predetermined spacings along a direction orthogonal to a direction in which the heat dissipation fins are extended.

10. The battery pack of claim 9, wherein
the heat dissipation fin extends in a straight line, or extend in a wavy pattern.

11. The battery pack of claim 1, wherein
the base plate further comprises:
an auxiliary heat dissipation fin (120) in the shape of a rib connecting a bottom part of the hollow and a ceiling part of the hollow inside the hollow and formed by extending along the longitudinal direction of the pack case.

12. The battery pack of claim 11, wherein
the auxiliary heat dissipation fins are formed by being spaced apart at predetermined spacings along a width direction of the pack case.

## Patentansprüche

1. Batteriepack, welcher ein Batteriemodul (B) aufnimmt, umfassend:
ein Packgehäuse (1000), in welchem ein Batteriemodul untergebracht ist; wobei
das Packgehäuse umfasst:
eine Haupttrennwand (200);
eine Basisplatte (100), welche mit jeder Seite der Haupttrennwand gekoppelt ist und einen Modulbereich umfasst, in welchem das Batteriemodul untergebracht ist; und
eine Seitenwand (300), welche entlang eines Umfangs einer mit der Haupttrennwand gekoppelten Basisplatte gekoppelt ist; und
die Haupttrennwand umfasst:
einen Wärmeableitungsteil (221), welcher eine Wärmeableitungsfinne (221a) umfasst, welche an einem unteren Teil vorsteht, um eine Wärmeableitung zu ermöglichen,
**dadurch gekennzeichnet, dass** die Basisplatte ein Hohlraum-Typ mit einem innenliegenden Hohlraum ist und eine Mehrzahl von Fluidpfadschläuchen(110) umfasst, welche dadurch gebildet sind, dass sie sich von dem Hohlraum entlang einer longitudinalen Richtung eines Packgehäuses erstrecken.

2. Batteriepack nach Anspruch 1, wobei
die Wärmeableitungsfinne sich entlang einer longitudinalen Richtung der Haupttrennwand erstreckend gebildet ist.

3. Batteriepack nach Anspruch 2, wobei
der Wärmeableitungsteil eine Mehrzahl von Wärmeableitungsfinnen umfasst, welche dadurch gebildet sind, dass sie in einer Breitenrichtung der Haupttrennwand in vorbestimmten Abständen voneinander beabstandet sind.

4. Batteriepack nach Anspruch 2, wobei
sich die Wärmeableitungsfinne in einer geraden Linie erstreckt oder sich in einem wellenförmigen Muster erstreckt.

5. Batteriepack nach Anspruch 1, wobei
sich die Wärmeableitungsfinne entlang einer Breitenrichtung der Haupttrennwand erstreckt.

6. Batteriepack nach Anspruch 5, wobei
der Wärmeableitungsteil eine Mehrzahl von Wärmeableitungsfinnen umfasst, welche dadurch gebildet sind, dass sie entlang einer longitudinalen Richtung der Haupttrennwand in vorbestimmten Abständen voneinander beabstandet sind.

7. Batteriepack nach Anspruch 5, wobei
sich die Wärmeableitungsfinne in einer geraden Linie erstreckt oder sich in einem wellenförmigen Muster erstreckt.

8. Batteriepack nach Anspruch 1, wobei
die Wärmeableitungsfinne sich relativ zu einer longitudinalen Richtung oder einer Breitenrichtung der Haupttrennwand in einer diagonalen Richtung erstreckend gebildet ist.

9. Batteriepack nach Anspruch 8, wobei
der Wärmeableitungsteil eine Mehrzahl von Wärmeableitungsfinnen umfasst, welche dadurch gebildet sind, dass sie entlang einer Richtung orthogonal zu einer Richtung, in welcher sich die Wärmeableitungsfinnen erstrecken, in vorbestimmten Abständen voneinander beabstandet sind.

10. Batteriepack nach Anspruch 9, wobei
sich die Wärmeableitungsfinne in einer geraden Linie erstreckt oder sich in einem wellenförmigen Muster erstreckt.

11. Batteriepack nach Anspruch 1, wobei
die Basisplatte ferner umfasst:
eine Hilfswärmeableitungsfinne (120) in der Form einer Rippe, welche einen Bodenteil des Hohlraums und einen Deckenteil des Hohlraums innerhalb des Hohlraums verbindet, und dadurch gebildet ist, dass sie sich entlang der longitudinalen Richtung des Packgehäuses erstreckt.

12. Batteriepack nach Anspruch 11, wobei
die Wärmeableitungsfinnen dadurch gebildet sind, dass sie entlang einer Breitenrichtung des Packgehäuses in vorbestimmten Abständen voneinander beabstandet sind.

## Revendications

1. Bloc-batterie contenant un module de batterie (B), comprenant :
un boîtier de bloc (1000) dans lequel un module de batterie est installé ; dans lequel le boîtier de bloc comprend :
une paroi de séparation principale (200) ;
une plaque de base (100) couplée à chaque côté de la paroi de séparation principale, et incluant une zone de module dans laquelle le module de batterie est installé ; et
une paroi latérale (300) couplée suivant un périmètre d'une plaque de base couplée à la paroi de séparation principale ; et
la paroi de séparation principale comprend :
une partie de dissipation de chaleur (221), qui inclut une ailette de dissipation de chaleur (221a) saillante pour permettre une dissipation de chaleur, au niveau d'une partie inférieure,
**caractérisé en ce que** la plaque de base est de type creux avec un intérieur creux, et comprend une pluralité de tubes de chemin de fluide (110) formés en prolongeant le creux suivant une direction longitudinale d'un boîtier de bloc.

2. Bloc-batterie selon la revendication 1, dans lequel
l'ailette de dissipation de chaleur est formée en s'étendant suivant une direction longitudinale de la paroi de séparation principale.

3. Bloc-batterie selon la revendication 2, dans lequel
la partie de dissipation de chaleur comprend une pluralité d'ailettes de dissipation de chaleur formées en étant espacées selon des espacements prédéterminés dans une direction de largeur de la paroi de séparation principale.

4. Bloc-batterie selon la revendication 2, dans lequel
l'ailette de dissipation de chaleur s'étend en ligne droite, ou s'étend selon un motif ondulé.

5. Bloc-batterie selon la revendication 1, dans lequel
l'ailette de dissipation de chaleur s'étend suivant une direction de largeur de la paroi de séparation principale.

6. Bloc-batterie selon la revendication 5, dans lequel
la partie de dissipation de chaleur comprend une pluralité d'ailettes de dissipation de chaleur formées en étant espacées selon des espacements prédéterminés suivant une direction longitudinale de la paroi de séparation principale.

7. Bloc-batterie selon la revendication 5, dans lequel
l'ailette de dissipation de chaleur s'étend en ligne droite, ou s'étend selon un motif ondulé.

8. Bloc-batterie selon la revendication 1, dans lequel
l'ailette de dissipation de chaleur est formée en s'étendant dans une direction diagonale par rapport à une direction longitudinale ou de largeur de la paroi de séparation principale.

9. Bloc-batterie selon la revendication 8, dans lequel
la partie de dissipation de chaleur comprend une pluralité d'ailettes de dissipation de chaleur formées en étant espacées selon des espacements prédéterminés suivant une direction orthogonale à une direction dans laquelle les ailettes de dissipation de chaleur sont étendues.

10. Bloc-batterie selon la revendication 9, dans lequel
l'ailette de dissipation de chaleur s'étend en ligne droite, ou s'étend selon un motif ondulé.

11. Bloc-batterie selon la revendication 1, dans lequel
la plaque de base comprend en outre :
une ailette de dissipation de chaleur auxiliaire (120) en forme de nervure reliant une partie de fond du creux et une partie de plafond du creux à l'intérieur du creux et formée en s'étendant suivant la direction longitudinale du boîtier de bloc.

12. Bloc-batterie selon la revendication 11, dans lequel
les ailettes de dissipation de chaleur auxiliaire sont formées en étant espacées selon des espacements prédéterminés suivant une direction de largeur du boîtier de bloc.
